# EUROPEAN PATENT APPLICATION

(11) **EP 1 650 944 A1**
(43) Date of publication of application: **26.04.2006**
(21) Application number: 04292529.7
(22) Date of filing: 25.10.2004
(51) Int. Cl.: H04M 17/00, H04L 12/14

(54) **Method for accounting a user accessing a prepaid service via an access control unit**

(71) Applicant: ALCATEL, 75008 Paris (FR)
(72) Inventor: De Cnodder, Stefaan Jozef, 2275 Lille (BE); Jonnala, Nagi Reddy c/o Brahmananda Reddy, 522303 Guntur AP India (IN)
(74) Representative: Narmon, Gisèle Marie Thérèse

(57) **Abstract**

The present invention relates to a method for accounting a particular user accessing a prepaid service, which prepaid service being supplied by a service provider, which communication device being coupled to the service provider via an access control unit, and comprising the steps of:
- sending an authorization from an authentication server to the access control unit to authorize the particular user to access the prepaid service,
- thereupon, granting the communication device an access to the prepaid service.

A method according to the invention further comprises the steps of:
- sending a notification from the access control unit to an accounting server to notify that the particular user gained access to the service provider,
- decrementing a quota allotted to the particular user according to a service usage,
- after the quota is exhausted, sending a request from the accounting server to the access control unit to disconnect the particular user from the service provider,
- thereupon, locking the access to the service provider.

The present invention also relates to an access control unit.

## Description

The present invention relates to a method for accounting a particular user accessing a prepaid service from a communication device, which prepaid service being supplied by a service provider, which communication device being coupled to said service provider via an access control unit, and comprising the steps of:
- sending an authorization from an authentication server to said access control unit, whereby said particular user is authorized to access said service provider,
- thereupon, granting said communication device an access in said access control unit to said service provider.

A service provider lets users access a particular network resource for carrying user traffic, or supplies a particular content or application to users. The service provider is not meant to be a business organization, but rather a set of technical means for supplying such services.

Examples of a service provider are an Internet Service Provider (ISP), providing users with an access to the Internet, and supplying services such as e-mail, web hosting, etc, a content provider for distributing content such as video movies, video channels, etc, and/or for supplying applications such as on-line gaming, video-conferencing, etc.

An access control unit provides a particular user with an access towards a service provider. The access control unit cooperates with an authentication server to check whether a particular user is allowed to access a service provider.

The authentication server typically authenticates a credential that the user supplies, such as a password, a user certificate, etc, and, upon successful authentication and policy control, returns an authorization to the access control unit whereby the user is authorized to access the specified service provider.

From that time onwards, data exchange means are enabled within the access control unit for carrying traffic between that particular user and the specified service provider, thereby allowing a particular service to be delivered to that particular user.

Examples of such an access control method are 802.1X port-based access control, PPP-based access control, DHCP-based access control, etc.

Examples of such an access control unit are a Digital Subscriber Line Access Multiplexer (DSLAM), a Broadband Remote Access server (BRAS), a bridge, a router, etc.

Examples of such an authentication server are a Radius server as defined in Request For Comment (RFC) 2865, published by the Internet Engineering Task Force (IETF), a Diameter server as defined in RFC 3588, etc.

An Example of such an authorization is a Radius access_accept message.

IETF and Third Generation Partnership Project 2 (3GPP2) standardization bodies have a solution that uses the authentication server to provide prepaid services. The solution is described in draft-lior-radius-prepaid-extensions-02.txt document (available for download at http://www.ietf.org/internet-drafts/draft-lior-radius-prepaid-extensions-05.txt), and in 3GPP2 X.S0011-006-C document (available for download at www.3gpp2.org/Public_html/specs/X.S0011-006-C-v1.0.pdf).

Briefly, when a user requests access to a prepaid service, the authentication server returns, in the authorization message, a certain quota (or credit), which the user may consume, to the access control unit. The quota is either a time during which the user can stay connected to the service provider, or a volume of traffic which the user can exchange with the service provider.

The access control unit measures the consumed resources, and compares them with the authorized quota. When the quota is closed to be reached, the access control unit asks the authentication server for more quota. The authentication server processes the requests, or delegates it towards a prepaid server.

Extending an authentication server with accounting and prepaid capabilities, and/or duplicating accounting resources over more than one server is questionable.

It is an object of the present invention to simplify network architecture, as well as the access control unit and the authentication server's implementation, while providing good backward compatibility with legacy equipment and protocols.

According to the invention, this object is achieved due to the fact that said method further comprises the steps of:
- sending a notification from said access control unit to an accounting server, whereby said access control unit notifies said accounting server that said particular user gained access to said service provider,
- decrementing a quota allotted to said particular user according to a service usage,
- after said quota is exhausted, sending a request from said accounting server to said access control unit, whereby said accounting server requests said access control unit to disconnect said particular user from said service provider,
- thereupon, locking said access to said service provider, thereby preventing said communication device from accessing said service provider.

The access control unit notifies the accounting server whenever a particular user has been granted an access towards a service provider providing a particular prepaid service.

Thereupon, the accounting server starts decrementing the quota allotted to that particular user based on the service usage.

When the quota is consumed, the accounting server requests the access control unit to disconnect the user from the service provider. As a consequence, the data exchange means, which have been enabled at session start up for carrying traffic between the user and the service provider, shall now be disabled.

A method according to the invention is advantageous in that the access control unit no longer needs to ask for more quota over and over. Instead, the access control unit fully relies on the accounting server to be notified whenever a particular user shall be disconnected from a service provider, thereby reducing processing and network load, and simplifying the access control unit and the authentication server's implementation.

A further advantage of the present invention is that the accounting is now done at a single place, thereby improving data integrity and confidentiality.

An embodiment of a method according to the invention is characterized in that it further comprises the step of, upon receipt of said authorization, sending a second request from said access control unit to said accounting server, whereby said access control units asks said accounting server whether said particular user has enough quota to access said service provider,
*and in that* the step of granting said access is carried out providing that said particular user has enough quota to access said service provider.

The accounting server checks, upon trigger from the access control unit, whether there is still some quota left for that user to access the service provider, or alternatively whether the user's quota is higher than a pre-determined threshold. If so, the accounting server returns an acknowledgment to the access control unit. The access control unit waits for that acknowledgment before granting the access, thereby preventing users, the credit of which is exhausted, from accessing the service provider.

Another embodiment of a method according to the invention is characterized in that said quota is time-based.

If so, the accounting server can determine the consumed time by itself, without any further interaction with the access control unit. When the allowed time elapses, the accounting server notifies the access control unit that the user session shall terminate.

Another embodiment of a method according to the invention is characterized in that said quota is volume-based,
and in that said method further comprises the steps of:
- measuring in said access control unit volumes of traffic exchanged at substantially-regular time-intervals between said communication device and said service provider, in one or both directions of communication,
- sending update reports from said access control unit to said accounting server, whereby said access control unit reports said volumes of traffic to said accounting server.

The access control unit measures, at substantially-regular time-intervals, and at a pre-determined service access point in the communication protocol suite, the amount of traffic (or payload) that is exchanged between the communication device and the service provider.

The measured payload is then reported to the accounting server and subtracted from the allowed quota, thereby allowing the accounting server to keep track of the consumed resources.

A further embodiment of a method according to the invention is characterized in that, in the event of said quota falling below a pre-determined threshold, said method further comprises the step of sending a third request from said accounting server to said access control unit, whereby said accounting server requests said access control unit to shorten said time intervals.

When the quota falls below a pre-determined threshold, the accounting server asks the access control units to send update reports at a faster pace, thereby improving the accounting granularity, and reducing the probability that service usage exceeds the allowed quota.

The present invention also relates to an access control unit adapted to control the access of a communication device operated by a particular user to a service provider supplying a prepaid service, and comprising an access control means adapted:
- to receive an authorization from an authentication server, whereby said particular user is authorized to access said service provider,
- thereupon, to grant said communication device an access to said service provider.

An access control unit according to the invention is characterized in that it further comprises a local accounting means coupled to said access control means, and adapted:
- to send a notification to an accounting server, whereby said access control unit notifies said accounting server that said particular user gained access to said service provider,
- to receive a first request from said accounting server, whereby said accounting server requests said access control unit to disconnect said particular user from said service provider,
and in that said access control means is further adapted, upon receipt of said first request, to lock said access to said service provider, thereby preventing said communication device from accessing said service provider.

Embodiments of an access control unit according to the invention correspond with the embodiments of a method according to the invention.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The above and other objects and features of the invention will become more apparent and the invention itself will be best understood by referring to the following description of an embodiment taken in conjunction with the accompanying drawings wherein:
- fig. 1 represents a communication system implementing time-based accounting according to the invention,
- fig. 2 represents a communication system implementing volume-based accounting according to the invention.

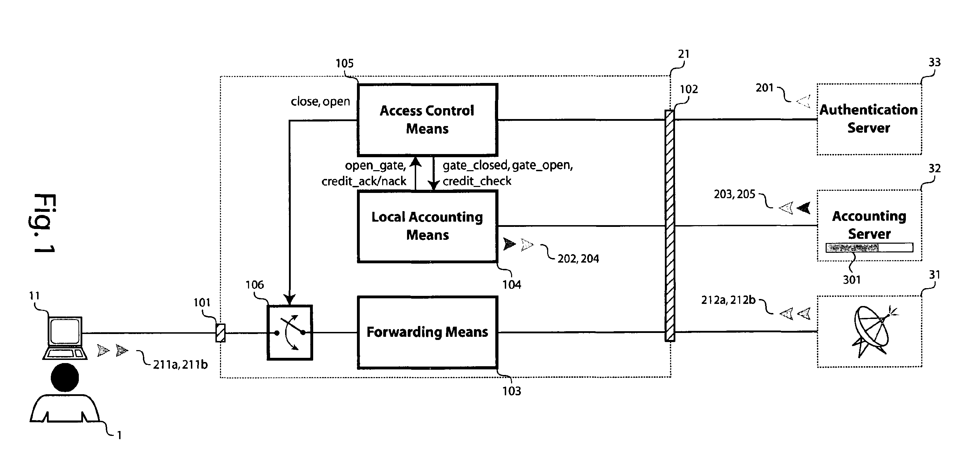

There is seen in fig. 1 a communication system comprising:
- a communication device 11, such as a personal computer, a digital audio/video terminal, a game console, etc, operated by a user 1,
- an access control unit 21,
- a service provider 31,
- an accounting server 32,
- an authentication server 33.

The communication device 11 is coupled to the access control unit 21, possibly via intermediate network equipment (not shown) such as a modem, a bridge, etc. The access control unit 21 is coupled to the service provider 31, to the accounting server 32 and to the authentication server 33, possibly via intermediate network equipment (not shown) such as a bridge, a router, a switch, etc.

The service provider 31 is adapted to deliver a particular prepaid content, such as video channels, upon request from a particular user, presently the user 1.

The accounting server 32 is adapted to count the total time during which a particular user accesses a prepaid service. The accounting server 32 maintains a time-quota on a per user basis, and possibly on a per service provider basis if more than one service provider is supported by the same accounting server. Presently, the accounting server 32 maintains a time-quota 301 that represents the remaining time during which the user 1 can benefit from services supplied by the service provider 31.

The accounting server 32 is further adapted to check, upon request from the access control unit 21, whether a particular user has still some time-quota available to access a particular service provider.

The authentication server 33 is adapted to authenticate users and, upon successful authentication and policy control, to return authorizations to the access control unit 21. The authentication server 33 is further adapted to tell the access control unit 21 whether prepaid accounting applies.

It is assumed that the authentication server 33 is coupled to the access control unit 21 via a Radius interface.

The access control unit 21 comprises the following functional blocks:
- a first communication port 101, to which the device 11 is coupled
- at least one second communication port 102, to which the service provider 31, the accounting server 32 and the authentication server 33 are coupled,
- a forwarding means 103,
- a local accounting means 104,
- an access control means 105,
- an access gateway 106.

In a preferred embodiment of the present invention, the access control unit 21 is an access multiplexer, such as a DSLAM.

The access control means 105 is coupled to the access gateway 106, to the local accounting means 104, to the communication port 102, and further to the authentication server 33. The access gateway 106 is further coupled to the forwarding means 103, to the communication port 101, and further to the device 11. The forwarding means 103 is further coupled to the communication port 102, and further to the service provider 31. The local accounting means 104 is further coupled to the communication port 102, and further to the accounting server 32.

In a preferred embodiment of the present invention, the access control means 105 implements IEEE 802.1X port-based access control, and more specifically implements 802.1X's authenticator role.

Traffic related to a particular user is identified by means of the identity of the incoming port through which it is received. Traffic related to a particular user can also be identified by means of e.g. a source MAC address.

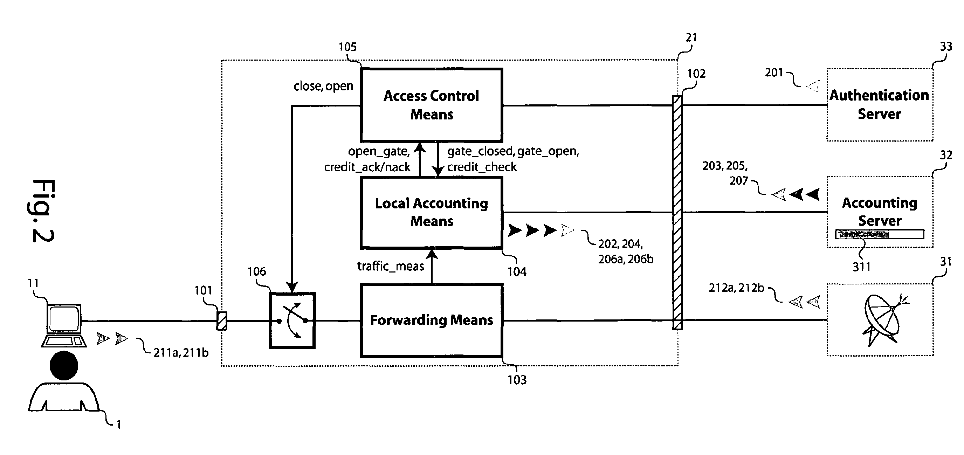

The gate 106 (see fig. 2) is initially open, i.e. traffic received through port 101 is not allowed to go further. If the authentication server 33 authorizes a particular user connected to that port to access a particular service provider, and furthermore if that user has enough credit to access that service provider, then the gate 106 is closed and traffic related to that user is allowed to enter the forwarding means 103, and further to flow through port 102 towards that service provider.

802.1X traffic is not subject to access control, and is forwarded towards the access control means 105 for further handling.

The forwarding means 103 is adapted to forward traffic between a particular user and a particular service provider. Forwarding decision is usually based upon a destination network or hardware address. Yet, forwarding decision may also be based upon some user context data that are initialized upon session set-up, such as a particular Virtual Local Area Network (VLAN) or a particular Asynchronous Transfer Mode (ATM) Virtual Connection (VC) whereto map traffic.

The local accounting means 104 is adapted to ask the accounting server 32 whether a particular user has enough credit to access a particular service provider.

The local accounting means 104 is further adapted to notify the accounting server 32 whenever the access status of a particular user changes.

The local accounting means 104 is further adapted to receive a request from the accounting server 32 to disconnect a particular user, the quota of which is exhausted.

In a preferred embodiment of the present invention, the local accounting means 104 makes use of existing Radius messages to communicate with the accounting server 32, thereby reducing implementation cost since that interface is already supported between the access control unit 21 and the authentication server 33.

An operation of the preferred embodiment follows.

It is assumed that the device 11 implements 802.1X's supplicant role. The supplicant role might as well be implemented by an intermediate network equipment.

The device 11 provides the access control unit 21 with a domain name identifying a particular service provider, presently the service provider 31, along with a user credential. The access control unit 21 uses that domain name to identify a particular authentication server, presently the authentication server 33. The user credential is forwarded towards the so-identified authentication server for authentication purpose. If the user 1 is successfully authenticated, the authentication server 33 returns a Radius access_accept message 201 for that particular user, together with an indication that prepaid accounting applies.

Thereupon, the access control means 105 requests the local accounting means 104 to check whether the user 1 has enough credit to access the service provider 31 (see credit_check in fig. 1). The local accounting means 104 sends a Radius accounting_req message 202 (with a new attribute to be defined) to the accounting server 32 to check whether the user 1 has enough credit to access the service provider 31.

The accounting server 32 checks whether the time-quota 301 is higher than a predetermined-threshold (e.g., is higher than 0), and sends a Radius accounting_resp message 203 with a positive or negative acknowledgment back to the access control unit 21. The local accounting means 104 forwards the information towards the access control means 105 (see credit_ack/nack in fig. 1).

Upon receipt of a positive acknowledgment from the accounting server 32, the access control means 105 closes the gate 106 (see close in fig. 1), thereby allowing a particular content to be delivered to the user 1. As an example, data packets 211a, 211b flow from the device 11, through the gate 106 and the forwarding means 103, towards the service provider 31, while data packets 212a, 212b flow in the reverse direction from the service provider 31, through the forwarding means 103 and the gate 106, towards the device 11.

The access control means 105 notifies the local accounting means 104 that the gate 106 has been closed (see gate_closed in fig. 1). Thereupon, the local accounting means 104 sends a Radius accounting_req message 204 with *accounting_start* attribute (further shortened as *accounting_start* message) to the accounting server 32 to notify that the user 1 has been granted an access to the service provider 31.

From that time onwards, the accounting server 32 starts decrementing the time-quota 301 allotted to the user 1 for accessing the service provider 31.

If the user 1 disconnects from the service provider 31 before the time-quota 301 is elapsed, the access control means 105 opens the gate 106 (see open in fig. 1), then notifies the local accounting means 104 (see gate_open in fig. 1). The local accounting means 104 sends a Radius *accounting_stop* message (not shown) to the accounting server 32 to notify that the current session between the user 1 and the service provider 31 terminates (or aborts). Thereupon, the accounting server 32 stops decrementing the time-quota 301.

If the user 1 is still connected to the service provider 31 when the time-quota 301 elapses, the accounting server 32 sends a Radius disconnect_request message 205 to the access control unit 21 to disconnect the user 1 from the service provider 31. The local accounting means 104 asks the access control means 105 to disconnect the user 1 from the service provider 31 (see open_gate and open in fig. 1), thereby preventing the user 1 from accessing the service provider 31.

It is to be noticed that, albeit the access gateway 106 has been drawn as a separate functional block for improved clarity, it may form part of the forwarding means 103. For instance, the access gateway 106 could be implemented by means of a filtering entry in a filtering database, which the forwarding means 103 makes use of while forwarding traffic.

There is seen in fig. 2 an alternative embodiment of the access control unit 21 for volume-based accounting.

The forwarding means 103 is further coupled to the local accounting means 104, and is further adapted to measure, and to periodically report to the local accounting means 104, the amount of traffic exchanged between the user 1 and the service provider 31 (see traffic_meas in fig. 2).

For instance, the forwarding means 103 may measure and report the number of bytes sent towards the user 1 (one-directional measurement).

The local accounting means 104 is further adapted to forward these figures to the accounting server 32 (possibly after some numerical conversion to conform with the agreed access control unit/accounting server interface) by means of Radius *interim_accounting_records* messages 206a, 206b.

The accounting server 32 is adapted to maintain a volume-quota on a per user basis, and possibly on a per service provider basis. Presently, the accounting server 32 maintains a volume quota 311 that represent the remaining amount of traffic which the user 1 can still exchange with the service provider 31.

When the volume quota falls below a pre-determined threshold, being an absolute (e.g., 1 Mbytes of traffic left) or a relative (e.g., 5 % of the initial quota) threshold, the accounting server 32 sends a Radius accounting_req message 207 (with a new attribute to be defined) to the access control unit 21 to reduce the measurement/reporting period, and thus to increase the accounting accuracy.

In an alternative embodiment of the present invention, the access control unit 21 does not ask the accounting server 32 whether a particular user has enough credit to access a particular service provider. The access control means 105 closes the gate 106 upon receipt of the authorization 201. If the user 1 has no credit left, he will be immediately disconnected from the service provider 31 upon trigger from the accounting server 32.

In an alternative embodiment of the present invention, the authentication server 33, in lieu of the access control unit 21, and before returning an authorization, asks the accounting server 32 whether a particular user has enough credit to access a particular service provider. If so, the access control means 105 closes the gate 106 upon receipt of the authorization 201, without the need for further checks with the accounting server 32.

In an alternative embodiment of the present invention, the access control unit 21 measures, and periodically reports to the accounting server 32, the exact consumed time. The accounting server 32 subtracts the consumed time from the allowed quota, until the quota is exhausted.

The accounting server 32 can similarly asks the access control unit 21 to shorten the reporting period when the time-quota falls below a pre-determined threshold.

In an alternative embodiment of the present invention, the access control unit 21 is a BRAS aggregating traffic from multiple users towards one or more service providers. The BRAS implements Point-to-Point Protocol (PPP)-based access control method.

The forwarding means 103 may then use a PPP-session identifier, in lieu of the incoming port identity, to identify traffic originating from a particular user.

In an alternative embodiment of the present invention, another access control method, e.g. based on Dynamic Host Configuration Protocol (DHCP) or Protocol for carrying Authentication for Network Access (PANA), is used in lieu of 802.1X.

In still an alternative embodiment of the present invention, another protocol, e.g. Diameter, is used between the access control unit 21 and the authentication server 33, and/or between the access control unit 21 and the accounting server 32.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A method for accounting a particular user (1) accessing a prepaid service from a communication device (11), which prepaid service being supplied by a service provider (31), which communication device being coupled to said service provider via an access control unit (21), and comprising the steps of:
- sending an authorization (201) from an authentication server (33) to said access control unit, whereby said particular user is authorized to access said service provider,
- thereupon, granting said communication device an access (106) in said access control unit to said service provider,
***characterized in that*** said method further comprises the steps of:
- sending a notification (204) from said access control unit to an accounting server (32), whereby said access control unit notifies said accounting server that said particular user gained access to said service provider,
- decrementing a quota (301, 311) allotted to said particular user according to a service usage,
- after said quota is exhausted, sending a first request (205) from said accounting server to said access control unit, whereby said accounting server requests said access control unit to disconnect said particular user from said service provider,
- thereupon, locking said access to said service provider, thereby preventing said communication device from accessing said service provider.

2. A method according to claim 1, ***characterized in that*** said method further comprises the step of, upon receipt of said authorization, sending a second request (202) from said access control unit to said accounting server, whereby said access control unit asks said accounting server whether said particular user has enough quota to access said service provider,
*and **in that*** the step of granting said access is carried out providing that said particular user has enough quota to access said service provider.

3. A method according to claim 1, ***characterized in that*** said quota is time-based.

4. A method according to claim 1, ***characterized in that*** said quota is volume-based,
*and **in that** said* method further comprises the steps of:
- measuring in said access control unit volumes of traffic exchanged at substantially-regular time-intervals between said communication device and said service provider, in one or both directions of communication,
- sending update reports (206a, 206b) from said access control unit to said accounting server, whereby said access control unit reports said volumes of traffic to said accounting server.

5. A method according to claim 4, ***characterized in that**,* in the event of said quota falling below a pre-determined threshold, said method further comprises the step of sending a third request (207) from said accounting server to said access control unit, whereby said accounting server requests said access control unit to shorten said time-intervals.

6. An access control unit (21) adapted to control the access of a communication device (11) operated by a particular user (1) to a service provider (31) supplying a prepaid service, and comprising an access control means (105) adapted:
- to receive an authorization (201) from an authentication server (33), whereby said particular user is authorized to access said service provider,
- thereupon, to grant said communication device an access (106) to said service provider,
***characterized in that*** said access control unit further comprises a local accounting means (104) coupled to said access control means, and adapted:
- to send a notification (204) to an accounting server (33), whereby said access control unit notifies said accounting server that said particular user gained access to said service provider,
- to receive a first request (205) from said accounting server, whereby said accounting server requests said access control unit to disconnect said particular user from said service provider,
*and **in that*** said access control means is further adapted, upon receipt of said first request, to lock said access to said service provider, thereby preventing said communication device from accessing said service provider.

## Amended claims

### Amended claims in accordance with Rule 86(2) EPC.

**1.** A method for accounting a particular user (1) accessing a prepaid service from a communication device (11), which prepaid service being supplied by a service provider (31), which communication device being coupled to said service provider via an access control unit (21), and comprising the steps of:
- sending a notification (204) from said access control unit to an accounting server (32), whereby said access control unit notifies said accounting server that said particular user gained an access (106) to said service provider,
- decrementing in said accounting server a quota (301, 311) allotted to said particular user according to a service usage,
***characterized in that*** said method further comprises the steps of:
- upon exhaustion of said quota, sending a first request (205) from said accounting server to said access control unit, whereby said accounting server unilaterally requests said access control unit to disconnect said particular user from said service provider,
- upon receipt of said first request, locking said access to said service provider.

**2.** A method according to claim 1, ***characterized in that*** said quota is time-based.

**3.** A method according to claim 1, ***characterized in that*** said quota is volume-based,
*and **in that*** said method further comprises the steps of:
- measuring in said access control unit volumes of traffic exchanged at substantially-regular time-intervals between said communication device and said service provider, in one or both directions of communication,
- sending update reports (206a, 206b) from said access control unit to said accounting server, whereby said access control unit reports said volumes of traffic to said accounting server.

**4.** A method according to claim 3, ***characterized in that**,* in the event of said quota falling below a pre-determined threshold, said method further comprises the step of sending a second request (207) from said accounting server to said access control unit, whereby said accounting server requests said access control unit to shorten said time-intervals.

**5.** An accounting server (33) adapted to account the access of a communication device (11) operated by a particular user (1) to a service provider (31) supplying a prepaid service, and adapted to:
- to receive a notification (204) from an access control unit (21), whereby said access control unit notifies said accounting server that said particular user gained an access (106) to said service provider,
- to decrement a quota (301, 311) allotted to said particular user according to a service usage,
**characterized in that** said accounting server is further adapted:
- upon exhaustion of said quota, to send a first request (205) to said access control unit, whereby said accounting server unilaterally requests said access control unit to disconnect said particular user from said service provider,
- upon receipt of said first request, locking said access to said service provider.
